# EUROPEAN PATENT APPLICATION

(11) **EP 4 601 033 A1**
(43) Date of publication of application: **13.08.2025**
(21) Application number: 24809198.5
(22) Date of filing: 30.10.2024
(51) Int. Cl.: H01M 4/36, H01M 4/525, H01M 4/505, H01M 4/485, H01M 4/04, C01G 53/00, H01M 4/131, H01M 4/62, H01M 10/052

(54) **POSITIVE ELECTRODE MATERIAL, AND PREPARATION METHOD THEREFOR AND USE THEREOF**

(30) Priority: 26.12.2023 CN 202311809967
(71) Applicant: Tianjin B&M Science And Technology Co., Ltd., Tianjin 300384 (CN)
(72) Inventor: ZHANG, Haitian, Tianjin 300384 (CN); LI, Honglei, Tianjin 300384 (CN); HUANG, Heping, Tianjin 300384 (CN); LV, Fei, Tianjin 300384 (CN); XU, Ning, Tianjin 300384 (CN)
(74) Representative: Meroni, Francesca
(86) International application number: PCT/CN2024/128598
(87) International publication number: WO 2025/139335

(57) **Abstract**

The present disclosure relates to the technical field of the battery, and specifically to a cathode material and a preparation method therefor, and use thereof. The cathode material of the present disclosure has a core-shell structure, wherein a core layer includes elements Li, Ni, M, Q, and O; a shell layer includes elements X and A; the core layer has a transition layer with an oxygen vacancy; the oxygen vacancy can be detected by XPS; an XPS peak position is at 529~533 eV; and the transition layer is close to the shell layer, wherein the element M includes at least one of Co, Mn, and Al; the element Q includes at least one of Mo, Nb, W, Ta, and B; the element X includes at least one of Mo and B; and the element A includes at least one of C, S, and N. In the cathode material of the present disclosure, the shell layer on the surface can improve the electronic conductivity, and the transition layer has the oxygen vacancy defect, which can effectively reduce the trend of the oxygen release. Through the coordination and cooperation of each layer structure, the cathode material has excellent structure stability and high capacity.

## Description

### CROSS-REFERENCE TO RELATED APPLICATION

The present disclosure claims priority to Chinese patent Application No. 202311809967.X, filed with the Chinese Patent Office on December 26, 2023, entitled "CATHODE MATERIAL AND PREPARATION METHOD THEREFOR, AND USE THEREOF", the entire contents of which are incorporated herein by reference.

### TECHNICAL FIELD

The present disclosure relates to the technical field of the battery, and specifically to a cathode material and a preparation method therefor, and use thereof.

### BACKGROUND ART

The layered cathode material containing nickel has been widely used and has a broad application prospect due to its higher specific capacity, higher energy density, lower cost, better safety, and other features. In layered cathode material with a higher nickel content, the crystal structure occurs a phase change with the increase of the voltage, and starts to release oxygen at the same time, which results in rapid degradation of the battery safety and electrical performance. The oxygen release leads to that the released singlet state oxygen reacts with the electrolyte, which generates a large amount of gas and heat, so as to further lead to chemical reactions in the battery system, and finally the battery undergoes thermal runaway, so as to occur the safety accident. Meanwhile, the oxygen release also leads to the destruction of the cathode material crystal structure, wherein the cycle performance and the capacity decline rapidly, which results in the battery failure. Additionally, since the cathode material has a lower electronic conductivity, the overpotential in use is higher, which results in problems that the cathode material is actually at a higher voltage and the oxygen release reaction becomes more intense. Due to this property, the energy density and cycle life of cathode material are greatly challenged.

Therefore, a simple and low-cost method to improve the high voltage stability of the cathode material is urgently needed.

In view of this, the present disclosure is proposed.

### SUMMARY

One object of the present disclosure is to provide a cathode material, wherein the overpotential of the cathode material can be effectively reduced by the cooperation of each layer, which helps inhibit the oxygen release of the cathode material under high voltage, and can improve the structure stability and capacity of the material.

Another object of the present disclosure is to provide a preparation method of the cathode material, wherein a transition layer containing oxygen vacancy defects is formed in the coating process by the cooperation of each step, which helps to inhibit the oxygen release phenomenon of the cathode under the high voltage, and can improve the structure stability and capacity of the battery.

Another object of the present disclosure is to provide a cathode plate.

Another object of the present disclosure is to provide a battery.

Another object of the present disclosure is to provide an electrical device.

In order to realize the above objects, the present disclosure adopts the following technical solutions.

A cathode material is provided, and the cathode material has a core-shell structure, wherein a core layer includes elements Li, Ni, M, Q, and O; a shell layer includes elements X and A; the core layer has a transition layer with an oxygen vacancy, wherein the oxygen vacancy can be detected by XPS; an XPS peak position is at 529~533 eV; and the transition layer is close to the shell layer, wherein
the element M includes at least one of Co, Mn, and Al; the element Q includes at least one of Mo, Nb, W, Ta, and B; the element X includes at least one of Mo and B; and the element A includes at least one of C, S, and N.

In one embodiment, a chemical formula of the cathode material is Li_{q}NiₐM_{b}Q_{c}XₕAₖO_{2-d}, wherein 1<q<1.56, 0.25<a<0.98, 0.02<b<0.75, 0<c<0.1, 0<h<0.1, 0<k<h, and 0<d<h+k.

In one embodiment, a thickness of the transition layer is: an outer surface of the core layer extending inwardly by 0.01~100 nm.

In one embodiment, a diameter of the core layer is 2.5~10 µm, and a thickness of the shell layer is 0.1~500 nm.

A preparation method of the cathode material includes the following steps:
performing a first heat treatment on a precursor material, and a first mixture consisted of a compound containing element Q and a lithium source, so as to obtain a first material; and performing a second heat treatment on the first material and a second mixture consisted of a compound containing element X, and a compound containing element A, wherein
the precursor material includes a hydroxide containing elements Ni and M; the element M includes at least one of Co, Mn, and Al; the element Q includes at least one of Mo, Nb, W, Ta, and B; the element X includes at least one of Mo and B; and the element A includes at least one of C, S, and N.

In one embodiment, a chemical formula of the precursor material is NiᵣMⱼ(OH)₂, wherein 0.3<i<0.98, and 0.02<j<0.7.

In one embodiment, a D50 particle size of the precursor material is 2.5~15 µm, and a specific surface area of the precursor material is 10~35 m²/g.

In one embodiment, a molar ratio of the element lithium in the lithium source, the precursor material, and the element Q in the compound containing element Q is (1~1.56): 1: x₁, wherein 0<x₁<0.1.

In one embodiment, the compound containing element Q includes at least one of an oxide of element Q and a hydroxide of element Q.

In one embodiment, the compound containing element X includes at least one of a nitride of element X, a sulfide of element X, and an oxide of element X.

In one embodiment, a molar ratio of the lithium source, the compound containing element X, and the compound containing element A in terms of the element lithium, the element X, and the element A respectively is (1~1.56): x₂: x₃, wherein 0<x₂<0.1, and 0<x₃<x₂.

In one embodiment, obtaining of the first mixture and obtaining of the second mixture are individually performed by at least one of a grinding device, a high-speed-mixing device, and a ploughshare mixing device.

In one embodiment, the first heat treatment includes a calcination treatment of at least two constant temperature sections, and temperatures of a plurality of constant temperature sections increase in a gradient.

In one embodiment, the second heat treatment includes a sintering treatment of at least one constant temperature section, and temperatures of a plurality of constant temperature sections increase gradually.

In one embodiment, the first heat treatment includes a first sintering treatment and a second sintering treatment, wherein a temperature of the first sintering treatment is 400~600°C, and a duration of the first sintering treatment is 0.5~5h; and a temperature of the second sintering treatment is 700~900°C, and a duration of the second sintering treatment is 5~15h.

In one embodiment, the first heat treatment includes a first sintering treatment and a second sintering treatment, and heating rates of the first sintering treatment and the second sintering treatment are individually 3~10°C/min.

In one embodiment, the first heat treatment is carried out in an atmosphere containing oxygen.

In one embodiment, the second heat treatment includes a third sintering treatment, a fourth sintering treatment, and a fifth sintering treatment, wherein a temperature of the third sintering treatment is 100~300°C, and a duration of the third sintering treatment is 0.5~3h; a temperature of the fourth sintering treatment is 320°C~450°C, and a duration of the fourth sintering treatment is 1~4h; and a temperature of the fifth sintering treatment is 500~700°C, and a duration of the fifth sintering treatment is 3~8h.

In one embodiment, the second heat treatment includes the third sintering treatment, the fourth sintering treatment, and the fifth sintering treatment, wherein heating rates of the third sintering treatment, the fourth sintering treatment, and the fifth sintering treatment are individually 3~10°C/min.

In one embodiment, a sintering atmosphere of the second heat treatment includes nitrogen or an atmosphere containing oxygen.

A cathode plate includes the cathode material, or a cathode material prepared by the preparation method of the cathode material.

A battery includes the cathode plate.

An electrical device includes the battery.

Compared with the prior art, the method of the present disclosure includes the following beneficial effects.
(1) In the cathode material of the present disclosure, the shell layer on the surface can improve the electronic conductivity, and the transition layer has the oxygen vacancy defect, which can effectively reduce the trend of the oxygen release. Meanwhile, the shell layer can effectively reduce the overpotential of the cathode material, which helps further inhibit the oxygen release of the cathode material under the high voltage. Through the coordination and cooperation of each layer structure, the cathode material has excellent structure stability and high capacity.
(2) The preparation method of the cathode material of the present disclosure is beneficial to improving the electrochemical performance of the cathode material by the cooperation of various raw materials and steps. Through the coating for the first material, it can effectively improve the electronic conductivity of the layered cathode material and reduce the overpotential of the cathode material, which contributes to the capacity and the structure stability; and at the same time, the transition layer containing oxygen vacancy defects is formed, which helps inhibit the oxygen release phenomenon of the cathode under high voltage, so as to improve the structure stability and the capacity.
(3) The battery of the present disclosure has the excellent reversible capacity and cycling stability performance.

### BRIEF DESCRIPTION OF DRAWINGS

In order to more clearly illustrate the technical solutions in the specific embodiments of the present disclosure or in the prior art, the drawings to be used in the description of the specific embodiments or the prior art will be briefly introduced below. It is obvious that the drawings described below are some embodiments of the present disclosure. For those of ordinarily skilled in the art, other drawings can be obtained from these drawings without inventive efforts.
FIG. 1 shows a scanning electron micrograph of a cathode material in Example 1 of the present disclosure;
FIG. 2 shows a scanning electron micrograph of a cathode material in Comparative Example 1 of the present disclosure;
FIG. 3 shows an X-ray photoelectric energy spectrum of a cathode material in Example 3 of the present disclosure;
FIG. 4 shows an X-ray photoelectric energy spectrum of a cathode material in Comparative Example 1 of the present disclosure; and
FIG. 5 shows an X-ray diffractogram in Example 1 and Comparative Example 1 of the present disclosure.

### DETAILED DESCRIPTION OF EMBODIMENTS

The embodiments of the present disclosure will be described in detail below in connection with embodiment. It will be understood by those skilled in the art that the following embodiments are used only to illustrate the present disclosure, and should not be regarded as a limitation of the scope of the present disclosure. Where specific conditions are not indicated in the examples, they shall be performed based on the usual conditions or those recommended by manufacturers. The reagents or instruments used without indication of the manufacturers are conventional products that can be purchased commercially.

According to an aspect of the present disclosure, the present disclosure relates to a cathode material, wherein the cathode material has a core-shell structure; a core layer includes elements Li, Ni, M, Q, and O; a shell layer includes elements X and A; the core layer has a transition layer with an oxygen vacancy; and the oxygen vacancy can be detected by XPS, wherein an XPS peak position is at 529~533 eV, and the transition layer is close to the shell layer, wherein
the element M includes at least one of Co, Mn, and Al; the element Q includes at least one of Mo, Nb, W, Ta, and B; the element X includes at least one of Mo and B; and the element A includes at least one of C, S, and N.

In the cathode material of the present disclosure, the shell layer on the surface can improve the electronic conductivity, and the transition layer has the oxygen vacancy defect, which can effectively reduce the trend of the oxygen release. Meanwhile, the shell layer can effectively reduce the overpotential of the cathode material, which helps further solve the oxygen release problem of the cathode material under the high voltage.

The improvement of the electronic conductivity of the cathode material can be acquired by testing the powder resistance by utilizing the powder tableting. The oxygen vacancy in the transition layer of the cathode material can be determined by analyzing the peak position of the oxygen after the XPS test.

In one embodiment, the carbon element includes at least one of graphite and amorphous carbon.

In one embodiment, the chemical formula of the cathode material is Li_{q}NiₐM_{b}Q_{c}XₕAₖO_{2-d}, wherein 1<q<1.56, 0.25<a<0.98, 0.02<b<0.75, 0<c<0.1, 0<h<0.1, 0<k<h, and 0<d<h+k. In one embodiment, the value of q includes, but is not limited to 1.05, 1.1, 1.2, 1.3, 1.4, 1.45, or 1.5, etc., the value of a includes, but is not limited to 0.28, 0.3, 0.4, 0.5, 0.6, 0.7, 0.8, or 0.9, etc., the value of b includes, but is not limited to 0.03, 0.05, 0.06, or 0.07, etc., c includes, but is not limited to 0.01, 0.02, 0.03, 0.05, 0.06, 0.07, or 0.08, etc., the values of h includes, but is not limited to 0.01, 0.02, 0.03, 0.05, 0.06, 0.08, 0.09, and 0.098, etc., the value of k includes, but is not limited to 0.008, 0.01, 0.02, 0.03, 0.05, 0.06, 0.08, and 0.09, etc., and the value of d includes, but is not limited to 0.01, 0.02, 0.03, 0.05, 0.06, 0.08, 0.09, 0.1, and 0.11, etc.

In one embodiment, the region of the transition layer is: an outer surface of the core layer extending inwardly by 0.01~100 nm, which includes, but is not limited to 0.1 nm, 0.5 nm, 1 nm, 5 nm, 10 nm, 20 nm, 30 nm, 50 nm, 60 nm, 80 nm, and 100 nm, etc. In one embodiment, a thickness of the transition layer is 1~100nm. The present disclosure provides the transition layer region with a suitable thickness, which is more beneficial to inhibiting the oxygen release phenomenon under high voltage, so as to improve the structure stability and the capacity.

In one embodiment, a diameter of the core layer is 2.5~10 µm, such as 2.5 µm, 5 µm, 6 µm, 8 µm, and 10 µm; and a thickness of the shell layer is 0.1~500 nm, such as 0.1 nm, 10 nm, 40 nm, 50 nm, 100 nm, 200 nm, 300 nm, and 500 nm.

According to another aspect of the present disclosure, the present disclosure further relates to a preparation method of a cathode material, including the following steps:
performing a first heat treatment on a precursor material, and a first mixture consisted of a compound containing element Q and a lithium source, so as to obtain a first material; and performing a second heat treatment on the first material, and a second mixture consisted of a compound containing element X, and a compound containing element A, wherein
the precursor material includes a hydroxide containing elements Ni and M; the element M includes at least one of Co, Mn, and Al; the element Q includes at least one of Mo, Nb, W, Ta, and B; the element X includes at least one of Mo and B; and the element A includes at least one of C, S, and N.

The preparation method of the cathode material of the present disclosure is beneficial to improving the electrochemical performance of the cathode material by the cooperation of various raw materials and steps. Through the coating of the first material, it can effectively improve the electronic conductivity of the layered cathode material and reduce the overpotential of the cathode material, which contributes to the capacity and the structure stability; and at the same time, the transition layer containing oxygen vacancy defects is formed, which helps inhibit the oxygen release phenomenon under high voltage, so as to improve the structure stability and the capacity.

In one embodiment, the chemical formula of the precursor material is NiᵣMⱼ(OH)₂, wherein 0.3<i<0.98, and 0.02<j<0.7. In one embodiment, the value of i includes, but is not limited to 0.4, 0.5, 0.6, 0.7, 0.8, or 0.9, etc., and the value of j includes, but is not limited to 0.02, 0.05, 0.08, 0.1, 0.2, 0.3, 0.4, 0.5, or 0.6, etc.

In one embodiment, the D50 particle size of the precursor material is 2.5~15 µm, including but not limited to 2.5 µm, 3 µm, 5 µm, 6 µm, 7 µm, 8 µm, 8 µm, 9 µm, 10 µm, 11 µm, 12 µm, 13 µm, 14 µm, or 15 µm, etc. The specific surface area of the precursor material is 10~35 m²/g, including but being not limited to 10 m²/g, 12 m²/g, 15 m²/g, 18 m²/g, 20 m²/g, 25 m²/g, 30 m²/g, and 35 m²/g, etc. The precursor material of the present disclosure has a suitable particle size and a specific surface area, which is more favorable to improve the structure stability and capacity of the final obtaining cathode material.

In one embodiment, the molar ratio of the element lithium in the lithium source, the precursor material, and the element Q in the compound containing element Q is (1~1.56): 1: x₁, wherein 0<x₁<0.1, such as 1.1:1:0.01, 1.3:1:0.05, and 1.5:1:0.08, etc. In one embodiment, the compound containing element Q includes at least one of an oxide of element Q and a hydroxide of element Q. In one embodiment, the compound containing element X includes at least one of a nitride of element X, a sulfide of element X, and an oxide of element X, such as boron nitride and molybdenum sulfide.

In one embodiment, the molar ratio of the lithium source, the compound containing element X, and the compound containing element A in terms of the element lithium, the element X, and the element A respectively is (1~1.56): x₂: x₃, wherein 0<x₂<0.1, and 0<x₃<x₂.

In one embodiment, obtaining of the first mixture and obtaining of the second mixture are individually performed by at least one of a grinding device, a high-speed-mixing device, and a ploughshare mixing device. The high-speed-mixing device is the high speed mixer, also called the plastic high speed mixer. It has functions of high-speed mixing and heating, so as to mix the material evenly. The ploughshare mixing device is the ploughshare mixer, wherein the plowshare inside rotates with the main shaft, so that the material makes turbulence circumferentially towards the radial direction along the cylinder arm, and at the same time, the radial material is scattered by the flying knives rotating at a high speed when flowing through the flying knife group along the route, wherein the scattered material is constantly overlapped and mixed, so that the material can be mixed evenly in a shorter duration. The first mixture and the second mixture obtained by the present disclosure can be more uniform and have a suitable particle size by the cooperation of one or more of the devices.

In one embodiment, the first heat treatment includes the calcination treatment of at least two constant temperature sections, and temperatures of a plurality of constant temperature sections increase in a gradient. The sintering treatment with the plurality of incremental constant temperature sections is carried out, so as to ensure that the crystal growth of the first material is more complete.

In one embodiment, the first heat treatment includes the first sintering treatment and the second sintering treatment. The temperature of the first sintering treatment is 400~600°C, such as 400°C, 450°C, 480°C, 500°C, 550°C, and 600°C; and a duration of the first sintering treatment is 0.5~5h, such as 0.5h, 1h, 1.5h, 2h, 3h, 4h, or 5h. The temperature of the second sintering treatment is 700~900°C, such as 700°C, 720°C, 750°C, 800°C, 820°C, 850°C, 880°C, or 900°C; and a duration of the second sintering treatment is 5~15h, such as 5h, 6h, 7h, 8h, 10h, 12h, or 15h. The heating rates of the first sintering treatment and the second sintering treatment are individually 3~10°C/min, such as 3°C/min, 4°C/min, 5°C/min, 6°C/min, and 10°C/min. The first heat treatment is carried out in the atmosphere containing oxygen, such as an oxygen atmosphere and an air atmosphere. The present disclosure adopts the suitable first treatment condition, so as to ensure the dispersion of the first material and the integrity of the crystalline structure, which lays a good foundation for obtaining the cathode material with more excellent electrochemical performance in subsequence.

In one embodiment, the second heat treatment includes a sintering treatment of at least one constant temperature section, and temperatures of a plurality of constant temperature sections increase gradually. The sintering treatment with the plurality of incremental constant temperature sections is carried out, so as to ensure the electrochemical performance of the final obtaining cathode material.

In one embodiment, the second heat treatment includes a third sintering treatment, a fourth sintering treatment, and a fifth sintering treatment. The temperature of the third sintering treatment is 100~300°C, including but not limited to 100°C, 120°C, 150°C, 180°C, 200°C, 220°C, 250°C, or 300°C, etc., and a duration of the third sintering treatment is 0.5~3h, including but not limited to 0.5h, 1h, 1.5h, 2h, 2.5h, and 3h, etc. The temperature of the fourth sintering treatment is 320°C~450°C, including but not limited to 320°C, 350°C, 370°C, 380°C, 400°C, 410°C, 420°C, 430°C, and 450°C, etc., and a duration of the fourth sintering treatment is 1~4h, such as 1h, 1.5h, 2h, 2.5h, 3h, 3.5h, and 4h, etc. The temperature of the fifth sintering treatment is 500~700°C, including but not limited to 500°C, 520°C, 550°C, 600°C, 650°C, 680°C, and 700°C, etc. The duration of the fifth sintering treatment is 3~8h, for example, the duration of the fifth sintering treatment is 3h, 4h, 5h, 6h, 7h, or 8h, etc. The heating rates of the third sintering treatment, the fourth sintering treatment, and the fifth sintering treatment are individually 3~10°C/min, such as 3°C/min, 4°C/min, 5°C/min, 8°C/min, and 10°C/min, etc. The sintering atmosphere of the second heat treatment includes nitrogen or an atmosphere containing oxygen, wherein the atmosphere containing oxygen includes the oxygen atmosphere or the air atmosphere. The present disclosure adopts the second heat treatment with the suitable condition, so as to ensure the better coating and form the bulk-phase oxygen vacancy defect, which can effectively inhibit the oxygen release reaction of the cathode material under high voltage and improve the reversible capacity and the cycle stability of the cathode material.

According to another aspect of the present disclosure, the present disclosure relates to a cathode plate, including the cathode material, or the cathode material prepared by the preparation method of the cathode material.

In one embodiment, the cathode plate includes a cathode collector and a cathode material layer arranged on the surface of at least one side of the cathode collector, and the cathode material layer includes the foregoing cathode material, a conductive agent, and a binder, wherein a mass ratio of the cathode material, the conductive agent, and the binder is (92~96): (2~4): (2~4). The conductive agent includes conductive carbon black, etc., and the binder includes polyvinylidene fluoride (PVDF).

According to another aspect of the present disclosure, the present disclosure further relates to a battery, including the cathode plate.

The battery of the present disclosure has the excellent reversible capacity and the cycling stability performance.

**In** one embodiment, the battery includes the above cathode plate, an anode plate, a separator, and an electrolyte.

According to another aspect of the present disclosure, the present disclosure further relates to an electrical device, including the battery. The electrical device includes the electric vehicle, and the household appliances, etc.

The following is a further description in conjunction with Examples and Comparative Examples.

### Example 1

A preparation method of the cathode material included the following steps.
(1) 1000g of Ni_{0.35}Co_{0.65}(OH)₂, 4g of tungsten oxide, and 640g of lithium hydroxide monohydrate were mixed evenly to obtain a first mixture by a ploughshare mixer, wherein a rotation speed was 1000 r/min; a mixing duration was 40 min; a D50 particle size of Ni_{0.35}Co_{0.65}(OH)₂ was 10 µm; and a specific surface area of the precursor material was 30 m²/g.
(2) The first mixture was placed in an oxygen atmosphere furnace for the first sintering and the second sintering in sequence, wherein a temperature of the first sintering was 500 °C; a duration of the first sintering was 4h; a heating rate was 3 °C/min; a temperature of the second sintering was 900 °C; a duration of the second sintering was 15h; and the heating rate was 3 °C/min. After the sintering was completed, it was cooled down to the room temperature, and then it was crushed and sieved, so as to obtain a first material.
(3) 1000g of the first material, 1g of boron nitride, 1g of molybdenum sulfide, and 2g of glucose were mixed evenly by using a ploughshare mixer, so as to obtain a second mixture, wherein a rotation speed was 1000r/min, and a mixing duration was 30min.
(4) The second mixture was placed in a heating furnace of the nitrogen atmosphere for the third sintering, wherein a temperature of the third sintering was 200°C; a duration of the third sintering was 1h; and the heating rate was 3°C/min; then it was heated to 350°C for the fourth sintering, wherein a duration the fourth sintering was 3h, and the heating rate was 3°C/min; and finally, it was heated to 700°C for the fifth sintering, wherein the sintering duration was 8h, and the heating rate was 3°C/min. The sintered material was crushed and sieved, so as to obtain the layered cathode material with surface coating and regulated bulk-phase oxygen vacancy concentration.

### Example 2

A preparation method of the cathode material included the following steps.
(1) 1000g of Ni_{0.35}Co_{0.65}(OH)₂, 4g of tungsten oxide, and 640g of lithium hydroxide monohydrate were mixed evenly to obtain the first mixture by the ploughshare mixer, wherein the rotation speed was 1000 r/min; the mixing duration was 40 min; the D50 particle size of Ni_{0.35}Co_{0.65}(OH)₂ was 10 µm; and the specific surface area of the precursor material was 30 m²/g.
(2) The first mixture was placed in an oxygen atmosphere furnace for the first sintering and the second sintering in sequence, wherein the temperature of the first sintering was 500 °C; the duration of the first sintering was 4h; the heating rate was 3 °C/min; the temperature of the second sintering was 900 °C; the duration of the second sintering was 15h; and the heating rate was 3 °C/min. After the sintering was completed, it was cooled down to the room temperature, and then it was crushed and sieved, so as to obtain the first material.
(3) 1000g of the first material, 1g of the boron nitride, 2g of the molybdenum sulfide, and 6g of the glucose were mixed evenly by using the ploughshare mixer, so as to obtain the second mixture, wherein the rotation speed was 1000r/min, and the mixing duration was 30min.
(4) The second mixture was placed in the heating furnace of the nitrogen atmosphere for the third sintering, wherein the temperature of the third sintering was 200°C; the duration of the third sintering was 1h; and the heating rate was 3°C/min; then it was heated to 350°C for the fourth sintering, wherein the duration the fourth sintering was 3h, and the heating rate was 3°C/min; and finally, it was heated to 400°C for the fifth sintering, wherein the sintering duration was 8h, and the heating rate was 3°C/min. The sintered material was crushed and sieved, so as to obtain the layered cathode material with surface coating and regulated bulk-phase oxygen vacancy concentration.

### Example 3

A preparation method of the cathode material included the following steps.
(1) 1000g of the Ni_{0.35}Co_{0.65}(OH)₂, 4g of the tungsten oxide, and 640g of the lithium hydroxide monohydrate were mixed evenly to obtain the first mixture by the ploughshare mixer, wherein the rotation speed was 1000 r/min; the mixing duration was 40 min; the D50 particle size of Ni_{0.35}Co_{0.65}(OH)₂ was 10 µm; and the specific surface area of the precursor material was 30 m²/g.
(2) The first mixture was placed in an oxygen atmosphere furnace for the first sintering and the second sintering in sequence, wherein the temperature of the first sintering was 500 °C; the duration of the first sintering was 4h; the heating rate was 3 °C/min; the temperature of the second sintering was 900 °C; the duration of the second sintering was 15h; and the heating rate was 3 °C/min. After the sintering was completed, it was cooled down to the room temperature, and then it was crushed and sieved, so as to obtain the first material.
(3) 1000g of the first material, 1g of the molybdenum sulfide, and 2g of the glucose were mixed evenly by using the ploughshare mixer, so as to obtain the second mixture, wherein the rotation speed was 1000r/min, and the mixing duration was 30min.
(4) The second mixture was placed in the heating furnace of the nitrogen atmosphere for the third sintering, wherein the temperature of the third sintering was 200°C; the duration of the third sintering was 1h; and the heating rate was 3°C/min; then it was heated to 350°C for the fourth sintering, wherein the duration the fourth sintering was 3h, and the heating rate was 3°C/min; and finally, it was heated to 400°C for the fifth sintering, wherein the sintering duration was 8h, and the heating rate was 3°C/min. The sintered material was crushed and sieved, so as to obtain the layered cathode material with surface coating and regulated bulk-phase oxygen vacancy concentration.

### Example 4

A preparation method of the cathode material included the following steps.
(1) 1000g of the Ni_{0.35}Co_{0.65}(OH)₂, 4g of the tungsten oxide, and 640g of the lithium hydroxide monohydrate were mixed evenly to obtain the first mixture by the ploughshare mixer, wherein the rotation speed was 1000 r/min; the mixing duration was 40 min; the D50 particle size of Ni_{0.35}Co_{0.65}(OH)₂ was 10 µm; and the specific surface area of the precursor material was 30 m²/g.
(2) The first mixture was placed in an oxygen atmosphere furnace for the first sintering and the second sintering in sequence, wherein the temperature of the first sintering was 500 °C; the duration of the first sintering was 4h; the heating rate was 3 °C/min; the temperature of the second sintering was 900 °C; the duration of the second sintering was 15h; and the heating rate was 3 °C/min. After the sintering was completed, it was cooled down to the room temperature, and then it was crushed and sieved, so as to obtain the first material.
(3) 1000g of the first material, 1g of the boron nitride, and 2g of the glucose were mixed evenly by using the ploughshare mixer, so as to obtain the second mixture, wherein the rotation speed was 1000r/min, and the mixing duration was 30min.
(4) The second mixture was placed in the heating furnace of the nitrogen atmosphere for the third sintering, wherein the temperature of the third sintering was 200°C; the duration of the third sintering was 1h; and the heating rate was 3°C/min; then it was heated to 350°C for the fourth sintering, wherein the duration the fourth sintering was 3h, and the heating rate was 3°C/min; and finally, it was heated to 400°C for the fifth sintering, wherein the sintering duration was 8h, and the heating rate was 3°C/min. The sintered material was crushed and sieved, so as to obtain the layered cathode material with surface coating and regulated bulk-phase oxygen vacancy concentration.

### Example 5

A preparation method of the cathode material included the following steps.
(1) 1000g of the Ni_{0.35}Co_{0.65}(OH)₂, 3g of niobium oxide, 1g of tantalum oxide, and 640g of the lithium hydroxide monohydrate were mixed evenly to obtain the first mixture by the ploughshare mixer, wherein the rotation speed was 1000 r/min; the mixing duration was 40 min; the D50 particle size of Ni_{0.35}Co_{0.65}(OH)₂ was 10 µm; and the specific surface area of the precursor material was 30 m²/g.
(2) The first mixture was placed in the oxygen atmosphere furnace for the first sintering and the second sintering in sequence, wherein the temperature of the first sintering was 500 °C; the duration of the first sintering was 4h; the heating rate was 3 °C/min; the temperature of the second sintering was 900 °C; the duration of the second sintering was 15h; and the heating rate was 3 °C/min. After the sintering was completed, it was cooled down to the room temperature, and then it was crushed and sieved, so as to obtain the first material.
(3) 1000g of the first material, 1g of boron nitride, 1g of molybdenum sulfide, and 2g of glucose were mixed evenly by using the ploughshare mixer, so as to obtain the second mixture, wherein the rotation speed was 1000r/min, and the mixing duration was 30min.
(4) The second mixture was placed in the heating furnace of the nitrogen atmosphere for the third sintering, wherein the temperature of the third sintering was 200°C; the duration of the third sintering was 1h; and the heating rate was 3°C/min; then it was heated to 350°C for the fourth sintering, wherein the duration the fourth sintering was 3h, and the heating rate was 3°C/min; and finally, it was heated to 400°C for the fifth sintering, wherein the sintering duration was 8h, and the heating rate was 3°C/min. The sintered material was crushed and sieved, so as to obtain the layered cathode material with surface coating and regulated bulk-phase oxygen vacancy concentration.

### Example 6

A preparation method of the cathode material included the following steps.
(1) 1000g of the Ni_{0.35}Mn_{0.65}(OH)₂ and 640g of the lithium hydroxide monohydrate were mixed evenly to obtain the first mixture by the ploughshare mixer, wherein the rotation speed was 900 r/min; the mixing duration was 60 min; the D50 particle size of Ni_{0.35}Co_{0.65}(OH)₂ was 8 µm; and the specific surface area of the precursor material was 32m²/g.
(2) The first mixture was placed in the oxygen atmosphere furnace for the first sintering and the second sintering in sequence, wherein the temperature of the first sintering was 400 °C; the duration of the first sintering was 5h; the heating rate was 5 °C/min; the temperature of the second sintering was 700 °C; the duration of the second sintering was 15h; and the heating rate was 5 °C/min. After the sintering was completed, it was cooled down to the room temperature, and then it was crushed and sieved, so as to obtain the first material.
(3) 1000g of the first material, 1g of the boron nitride, 1g of the molybdenum sulfide, and 2g of the glucose were mixed evenly by using the ploughshare mixer, so as to obtain the second mixture, wherein the rotation speed was 900r/min, and the mixing duration was 50min.
(4) The second mixture was placed in the heating furnace of the nitrogen atmosphere for the third sintering, wherein the temperature of the third sintering was 100°C; the duration of the third sintering was 3h; and the heating rate was 5°C/min; then it was heated to 400°C for the fourth sintering, wherein the duration the fourth sintering was 0.5h, and the heating rate was 5°C/min; and finally, it was heated to 600°C for the fifth sintering, wherein the sintering duration was 5h, and the heating rate was 5°C/min. The sintered material was crushed and sieved, so as to obtain the layered cathode material with surface coating and regulated bulk-phase oxygen vacancy concentration.

### Example 7

A preparation method of the cathode material included the following steps.
(1) 1000g of the Ni_{0.35}Mn_{0.65}(OH)₂ and 640g of the lithium hydroxide monohydrate were mixed evenly to obtain the first mixture by the ploughshare mixer, wherein the rotation speed was 1100 r/min; the mixing duration was 30 min; the D50 particle size of Ni_{0.35}Mn_{0.65}(OH)₂was 12 µm; and the specific surface area of the precursor material was 28 m²/g.
(2) The first mixture was placed in the oxygen atmosphere furnace for the first sintering and the second sintering in sequence, wherein the temperature of the first sintering was 600 °C; the duration of the first sintering was 0.5h; the heating rate was 5 °C/min; the temperature of the second sintering was 900 °C; the duration of the second sintering was 5h; and the heating rate was 5 °C/min. After the sintering was completed, it was cooled down to the room temperature, and then it was crushed and sieved, so as to obtain the first material.
(3) 1000g of the first material, 1g of the boron nitride, 1g of the molybdenum sulfide, and 2g of the glucose were mixed evenly by using the ploughshare mixer, so as to obtain the second mixture, wherein the rotation speed was 900r/min, and the mixing duration was 50min.
(4) The second mixture was placed in the heating furnace of the nitrogen atmosphere for the third sintering, wherein the temperature of the third sintering was 300°C; the duration of the third sintering was 3h; and the heating rate was 5°C/min; then it was heated to 480°C for the fourth sintering, wherein the duration the fourth sintering was 0.5h, and the heating rate was 5°C/min; and finally, it was heated to 700°C for the fifth sintering, wherein the sintering duration was 3h, and the heating rate was 5°C/min. The sintered material was crushed and sieved, so as to obtain the layered cathode material with surface coating and regulated bulk-phase oxygen vacancy concentration.

### Comparative Example 1

The preparation method of the cathode material included the following steps.
(1) 1000g of the Ni_{0.35}Mn_{0.65}(OH)₂ and 640g of the lithium hydroxide monohydrate were mixed evenly to obtain the first mixture by the ploughshare mixer, wherein the rotation speed was 1100 r/min; the mixing duration was 30 min; the D50 particle size of Ni_{0.35}Mn_{0.65}(OH)₂ was 12 µm; and the specific surface area of the precursor material was 28 m²/g.
(2) The first mixture was placed in the oxygen atmosphere furnace for the first sintering and the second sintering in sequence, wherein the temperature of the first sintering was 600 °C; the duration of the first sintering was 0.5h; the heating rate was 5 °C/min; the temperature of the second sintering was 900 °C; the duration of the second sintering was 5h; and the heating rate was 5 °C/min. After the sintering was completed, it was cooled down to the room temperature, and then it was crushed and sieved, so as to obtain the first material.

### Comparative Example 2

The preparation method of the cathode material included the following steps.
(1) 1000g of the Ni_{0.35}Co_{0.65}(OH)₂, 4g of the tungsten oxide, and 640g of the lithium hydroxide monohydrate were mixed evenly to obtain the first mixture by the ploughshare mixer, wherein the rotation speed was 1000 r/min; the mixing duration was 40 min; the D50 particle size of Ni_{0.35}Co_{0.65}(OH)₂ was 10 µm; and the specific surface area of the precursor material was 30 m²/g.
(2) The first mixture was placed in the oxygen atmosphere furnace for the first sintering and the second sintering in sequence, wherein the temperature of the first sintering was 500 °C; the duration of the first sintering was 4h; the heating rate was 3 °C/min; the temperature of the second sintering was 900 °C; the duration of the second sintering was 15h; and the heating rate was 3 °C/min. After the sintering was completed, it was cooled down to the room temperature, and then it was crushed and sieved, so as to obtain the first material.
(3) 1000g of the first material and 2g of the glucose were mixed evenly by using the ploughshare mixer, so as to obtain the second mixture, wherein the rotation speed was 1000r/min, and the mixing duration was 30min.
(4) The second mixture was placed in a heating furnace of the nitrogen atmosphere for the third sintering, wherein a temperature of the third sintering was 200°C; a duration of the third sintering was 1h; and the heating rate was 3°C/min; then it was heated to 350°C for the fourth sintering, wherein a duration the fourth sintering was 3h, and the heating rate was 3°C/min; and finally, it was heated to 700°C for the fifth sintering, wherein the sintering duration was 8h, and the heating rate was 3°C/min. The sintered material was crushed and sieved, so as to obtain the cathode material.

### Comparative Example 3

The preparation method of the cathode material included the following steps.
(1) 1000g of Ni_{0.35}Co_{0.65}(OH)₂, 4g of the tungsten oxide, and 640g of the lithium hydroxide monohydrate were mixed evenly to obtain the first mixture by the ploughshare mixer, wherein the rotation speed was 1000 r/min; the mixing duration was 40 min; the D50 particle size of Ni_{0.35}Co_{0.65}(OH)₂ was 10 µm; and the specific surface area of the precursor material was 30 m²/g.
(2) The first mixture was placed in the oxygen atmosphere furnace for the first sintering and the second sintering in sequence, wherein the temperature of the first sintering was 500 °C; the duration of the first sintering was 4h; the heating rate was 3 °C/min; the temperature of the second sintering was 900 °C; the duration of the second sintering was 15h; and the heating rate was 3 °C/min. After the sintering was completed, it was cooled down to the room temperature, and then it was crushed and sieved, so as to obtain the first material.
(3) 1000g of the first material, 1g of boron nitride, and 1g of molybdenum sulfide were mixed evenly by using the ploughshare mixer, so as to obtain the second mixture, wherein the rotation speed was 1000r/min, and the mixing duration was 30min.
(4) The second mixture was placed in a heating furnace of the nitrogen atmosphere for the third sintering, wherein a temperature of the third sintering was 200°C; a duration of the third sintering was 1h; and the heating rate was 3°C/min; then it was heated to 350°C for the fourth sintering, wherein a duration the fourth sintering was 3h, and the heating rate was 3°C/min; and finally, it was heated to 700°C for the fifth sintering, wherein the sintering duration was 8h, and the heating rate was 3°C/min. The sintered material was crushed and sieved, so as to obtain the cathode material.

### Experimental Example

### I. Graphical Analysis

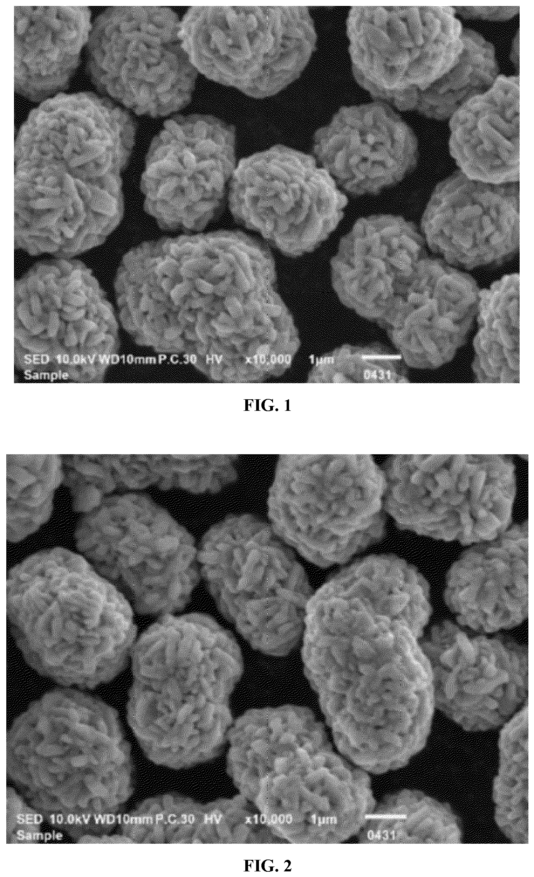

The scanning electron microscope was used to characterize the morphology of the cathode materials prepared by Example 1 and Comparative Example 1, wherein the scanning electron microscope image of the cathode material in Example 1 is shown in FIG. 1, and the scanning electron microscope image of the cathode material in Comparative Example 1 is shown in FIG. 2. It can be seen that the surface of the cathode material in Example 1 of the present disclosure is relatively uniform, and the precipitation of the modified layer was not found.

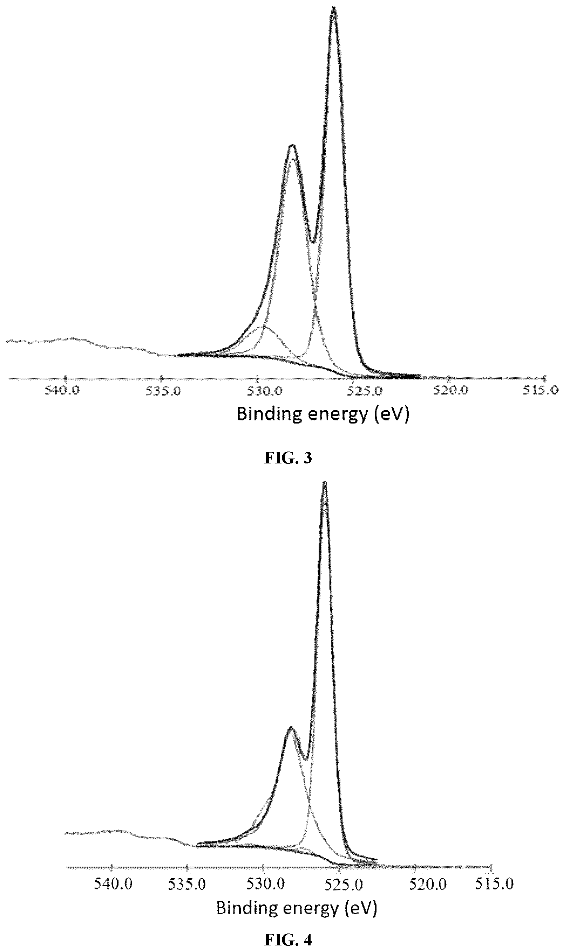

The X-ray photoelectric energy spectrum (XPS pattern) of the cathode material in Example 3 of the present disclosure is shown in FIG. 3, and the X-ray photoelectric energy spectrum of the cathode material in Comparative Example 1 of the present disclosure is shown in FIG. 4. It can be seen that the content of the surface oxygen vacancy is only 31.1% in the untreated cathode material of Comparative Example 1, but the oxygen vacancy content of the treated cathode material in Example 3 reaches 47.5%, which shows that the content of the surface oxygen vacancy has been significantly increased after the treatment.

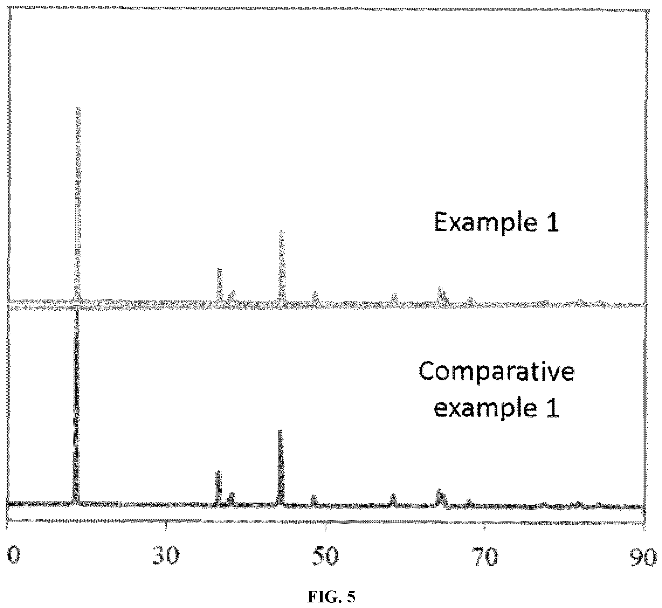

The X-ray diffractograms (XRD) in Example 1 and Comparative Example 1 of the present disclosure are shown in FIG. 5. It can be seen that the XRD patterns of the two cathode materials are consistent, wherein the cathode material of the present disclosure indicates that the content of the surface modified layer is lower, and the modified layer does not have phenomena of segregation and agglomeration that can be detected by XRD, which proves the homogeneity of the surface modification.

### II. Electronic Conductivity Testing of the Cathode Material

The cathode material to be tested was placed in the mold, and 200 MPa pressure was applied. After holding pressure for 3 min, the resistance was tested by an instrument to characterize the electronic conductance of the material. After the oxygen vacancy treatment, the resistance decreased, which indicated that electronic conductance increased. After the carbon source such as glucose was added, the resistance further decreased, which indicated that the conductivity further increased. As for the heat treatment temperature, the too high treatment temperature resulted in a large increase in resistance, which indicated a large decrease in electronic conductance.

The test result is shown in Table 1.

**Table 1 Testing result of electronic conductivity of cathode material**

| Group | Resistance |
|---|---|
| Example 1 | 137420 |
| Example 2 | 138549 |
| Example 3 | 136587 |
| Example 4 | 141233 |
| Example 5 | 165487 |
| Example 6 | 173495 |
| Example 7 | 175800 |
| Comparative Example 1 | 151636 |
| Comparative Example 2 | 162830 |
| Comparative Example 3 | 165640 |

### III. Battery Performance Testing

The cathode materials obtained by the Examples and the Comparative Examples were prepared to button cells respectively. The preparation method of the button cell includes: preparing the materials in a mass ratio of the cathode material: conductive agent: PVDF=95: 3: 2, and mixing them with the solvent to obtain the cathode slurry; coating the cathode slurry on the surface of the cathode collector, and obtaining the cathode plate after drying; and assembling by using the lithium metal as the anode plate, the commercial celgard as the separator, and EC, DC, and DMC (volume ratio is 1:1:1) as the electrolyte, so as to obtain the LR2032 button cell.

The assembled button cell was charged and discharged at a constant temperature of 45°C for 50 cycles at a voltage range of 2.5V~4.25V by a constant current of 0.3C, and the testing result is shown in Table 2.

| Table 2 Performance testing result of battery | | | | |
|---|---|---|---|---|
| Group | Charging specific capacity (mAh/g) | Discharge specific capacity (mAh/g) | Coulombic efficiency (%) | Cycle retention rate (%) |
| Example 1 | 283.7 | 245.1 | 86.38 | 86 |
| Example 2 | 282.3 | 245.8 | 87.13 | 86 |
| Example 3 | 280.4 | 242.7 | 86.58 | 87 |
| Example 4 | 283.7 | 243.9 | 86 | 87 |
| Example 5 | 270 | 210.6 | 78 | 86 |
| Example 6 | 268 | 201 | 75 | 85 |
| Example 7 | 260 | 182 | 70 | 88 |
| Comparative Example 1 | 282 | 246.2 | 87.3 | 88 |
| Comparative Example 2 | 281 | 244.5 | 87 | 88 |
| Comparative Example 3 | 281.5 | 244.9 | 87 | 87 |

As can be seen from Table 2, after the surface-coating modification, the first-cycle charging capacity decreases due to the generation of the oxygen vacancy in the cathode material; and at the same time, since the high-electronic-conductivity coating layer is used, and the oxygen vacancy plays an inhibiting effect on the lattice oxygen release, so that the reversible capacity increases; the discharging capacity increases; and the first-cycle Coulombic efficiency increases. Meanwhile, the cycling performance is also improved due to the protection effect of the oxygen vacancy transition layer. The reversible capacity and the cycling stability of the batteries obtained by the cathode materials of Comparative Examples 1~3 are poorer.

In summary, the electronic conductivity of the cathode material can be improved due to the coating with the high-electronic-conductivity material on the cathode material in the present disclosure; and at the same time, during the coating process, the coating layer reacts with the cathode material bulk at high temperature to form the bulk-phase oxygen vacancy defect, which effectively inhibits the oxygen release reaction of the cathode material under high voltage and can improve the reversible capacity and the cycle stability of the cathode material.

Finally, it should be noted that the above embodiments are only used to illustrate the technical solutions of the present disclosure, and not to restrict it. Although the present disclosure is described in detail referring to the foregoing embodiments, those of ordinarily skilled in the art should understand that it can still modify the technical solutions recorded in the foregoing embodiments or to make equivalent substitutions for some or all technical features therein; and these modifications or replacements do not take the essence of the corresponding technical solutions out of the scope of the technical solutions of the embodiments of the present disclosure.

## Claims

1. A cathode material, wherein the cathode material has a core-shell structure, wherein a core layer comprises elements Li, Ni, M, Q, and O; a shell layer comprises elements X and A; the core layer has a transition layer with an oxygen vacancy, and the oxygen vacancy can be detected by XPS; an XPS peak position is at 529~533 eV; and the transition layer is close to the shell layer, wherein
the element M comprises at least one of Co, Mn, and Al; the element Q comprises at least one of Mo, Nb, W, Ta, and B; the element X comprises at least one of Mo and B; and the element A comprises at least one of C, S, and N.

2. The cathode material according to claim 1, comprising at least one of following features (1) to (3):
(1) a chemical formula of the cathode material is Li_{g}NiₐM_{b}Q_{c}XₕAₖO_{2-d}, wherein 1<q<1.56, 0.25<a<0.98, 0.02<b<0.75, 0<c<0.1, 0<h<0.1, 0<k<h, and 0<d<h+k;
(2) a thickness of the transition layer is: an outer surface of the core layer extending inwardly by 0.01~100 nm; and
(3) a diameter of the core layer is 2.5~10 µm, and a thickness of the shell layer is 0.1~500 nm.

3. A preparation method of a cathode material, comprising following steps:
performing a first heat treatment on a precursor material, and a first mixture consisted of a compound containing element Q and a lithium source, so as to obtain a first material; and performing a second heat treatment on the first material and a second mixture consisted of a compound containing element X, and a compound containing element A, wherein
the precursor material comprises a hydroxide containing elements Ni and M; the element M comprises at least one of Co, Mn, and Al; the element Q comprises at least one of Mo, Nb, W, Ta, and B; the element X comprises at least one of Mo and B; and the element A comprises at least one of C, S, and N.

4. The preparation method of the cathode material according to claim 3, comprising at least one of following features (1) to (6):
(1) a chemical formula of the precursor material is NiᵣMⱼ(OH)₂, wherein 0.3<i<0.98, and 0.02<j<0.7;
(2) a D50 particle size of the precursor material is 2.5~15 µm, and a specific surface area of the precursor material is 10~35 m²/g;
(3) a molar ratio of an element lithium in the lithium source, the precursor material, and the element Q in the compound containing element Q is (1~1.56): 1: x₁, wherein 0<x₁<0.1;
(4) the compound containing element Q comprises at least one of an oxide of element Q and a hydroxide of element Q;
(5) the compound containing element X comprises at least one of a nitride of element X, a sulfide of element X, and an oxide of element X; and
(6) a molar ratio of the lithium source, the compound containing element X, and the compound containing element A in terms of the element lithium, the element X, and the element A respectively is (1~1.56): x₂: x₃, wherein 0<x₂<0.1, and 0<x₃<x₂.

5. The preparation method of the cathode material according to claim 3, comprising at least one of following features (1) to (3):
(1) obtaining of the first mixture and obtaining of the second mixture are each individually performed by at least one of a grinding device, a high-speed-mixing device, and a ploughshare mixing device;
(2) the first heat treatment comprises a calcination treatment of at least two constant temperature sections, and temperatures of a plurality of constant temperature sections increase in a gradient; and
(3) the second heat treatment comprises a sintering treatment of at least one constant temperature section, and temperatures of a plurality of constant temperature sections increase gradually.

6. The preparation method of the cathode material according to claim 3, comprising at least one of following features (1) to (3):
(1) the first heat treatment comprises a first sintering treatment and a second sintering treatment, wherein a temperature of the first sintering treatment is 400~600°C, and a duration of the first sintering treatment is 0.5~5h; and a temperature of the second sintering treatment is 700~900°C, and a duration of the second sintering treatment is 5~15h;
(2) the first heat treatment comprises a first sintering treatment and a second sintering treatment, and heating rates of the first sintering treatment and the second sintering treatment are each individually 3~10°C/min; and
(3) the first heat treatment is carried out in an atmosphere containing oxygen.

7. The preparation method of the cathode material according to claim 3, comprising at least one of following features (1) to (3):
(1) the second heat treatment comprises a third sintering treatment, a fourth sintering treatment, and a fifth sintering treatment, wherein a temperature of the third sintering treatment is 100~300°C, and a duration of the third sintering treatment is 0.5~3h; a temperature of the fourth sintering treatment is 320°C~450°C, and a duration of the fourth sintering treatment is 1~4h; and a temperature of the fifth sintering treatment is 500~700°C, and a duration of the fifth sintering treatment is 3~8h;
(2) the second heat treatment comprises a third sintering treatment, a fourth sintering treatment, and a fifth sintering treatment, wherein heating rates of the third sintering treatment, the fourth sintering treatment, and the fifth sintering treatment are each individually 3~10°C/min; and
(3) a sintering atmosphere of the second heat treatment comprises nitrogen or an atmosphere containing oxygen.

8. A cathode plate, comprising the cathode material according to any one of claims 1~2, or the cathode material obtained by the preparation method of the cathode material according to any one of claims 3~7.

9. A battery, comprising the cathode plate according to claim 8.

10. An electrical device, comprising the battery according to claim 9.
